(19) Europäisches Patentamt
European Patent Office
Office européen des brevets

(11) EP 1 272 581 B1

(12) **EUROPEAN PATENT SPECIFICATION**

(45) Date of publication and mention of the grant of the patent:
**28.04.2004 Bulletin 2004/18**

(21) Application number: **01915209.9**

(22) Date of filing: **07.02.2001**

(51) Int Cl.[7]: **C09J 4/06**, C09D 4/06

(86) International application number:
**PCT/EP2001/001373**

(87) International publication number:
**WO 2001/057094 (09.08.2001 Gazette 2001/32)**

(54) **CURABLE POLYMERIC COMPOSITIONS**

VERNETZBARE POLYMERZUSAMMENSETZUNGEN

COMPOSITIONS POLYMERES DURCISSABLES PAR RAYONNEMENT ET THERMODURCISSABLES A ADHERENCE AMELIOREE

(84) Designated Contracting States:
**AT BE CH CY DE DK ES FI FR GB GR IE IT LI LU MC NL PT SE TR**

(30) Priority: **07.02.2000 US 499232**

(43) Date of publication of application:
**08.01.2003 Bulletin 2003/02**

(73) Proprietor: **SARTOMER COMPANY, INC.**
**Exton, PA 19431 (US)**

(72) Inventor: **ESTRIN, Tanya**
**Grand Junction, CO 81503 (US)**

(74) Representative: **Chaillot, Geneviève**
**Cabinet CHAILLOT,**
**B.P. No. 74**
**92703 Colombes Cédex (FR)**

(56) References cited:
**EP-A- 0 425 085**
**EP-A- 0 456 380**
**EP-A- 0 465 670**
**EP-A- 0 679 663**
**WO-A-98/22545**

- **DATABASE WPI Section Ch, Week 197405 Derwent Publications Ltd., London, GB; Class A12, AN 1974-08042V XP002171434 & JP 48 066186 A (JAPAN ATOMIC ENERGY RES INST), 11 September 1973 (1973-09-11)**
- **DATABASE WPI Section Ch, Week 197819 Derwent Publications Ltd., London, GB; Class A12, AN 1978-34065A XP002171435 & JP 53 033233 A (NIPPON OILS & FATS CO LTD), 29 March 1978 (1978-03-29)**
- **DATABASE WPI Section Ch, Week 197946 Derwent Publications Ltd., London, GB; Class A12, AN 1979-83288B XP002171436 & JP 54 129044 A (UBE IND LTD), 6 October 1979 (1979-10-06)**
- **PATENT ABSTRACTS OF JAPAN vol. 005, no. 195 (C-083), 11 December 1981 (1981-12-11) & JP 56 118401 A (SEKISUI CHEM CO LTD), 17 September 1981 (1981-09-17)**
- **DATABASE WPI Section Ch, Week 198451 Derwent Publications Ltd., London, GB; Class A14, AN 1984-315367 XP002171437 & JP 59 197402 A (KANSAI PAINT CO LTD), 9 November 1984 (1984-11-09)**
- **DATABASE WPI Section Ch, Week 198831 Derwent Publications Ltd., London, GB; Class A14, AN 1988-215533 XP002171438 & JP 63 150304 A (MITSUBISHI PETROCHEMICAL CO LTD), 23 June 1988 (1988-06-23)**
- **PATENT ABSTRACTS OF JAPAN vol. 015, no. 508 (C-0897), 24 December 1991 (1991-12-24) & JP 03 223317 A (NIPPON PETROCHEM CO LTD), 2 October 1991 (1991-10-02)**
- **PATENT ABSTRACTS OF JAPAN vol. 018, no. 612 (P-1829), 21 November 1994 (1994-11-21) & JP 06 230725 A (OJI YUKA SYNTHETIC PAPER CO LTD;OTHERS: 01), 19 August 1994 (1994-08-19)**
- **CHEMICAL ABSTRACTS, vol. 125, no. 2, 8 July 1996 (1996-07-08) Columbus, Ohio, US; abstract no. 13443, XP002171433 & JP 08 059757 A (KANSAI PAINT KK) 5 March 1996 (1996-03-05)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 272 581 B1

Printed by Jouve, 75001 PARIS (FR)

## Description

BACKGROUND OF THE INVENTION

This invention relates generally to polymers having improved adhesive and coating properties on a wide variety of subtances.

Polybutadiene (PBD) is a non-polar, soft, low modulus polymer having poor adhesion to metals, glass, plastics and other materials. Polybutadiene is generally unsuited as a coating, primer or adhesion-enhancing additive for rubber and plastic formulations. However, polymers such as polybutadiene having molecular weights higher than about 2,000 g/M would be desirable for use in adhesives and coatings since their relatively high molecular weight would result in less shrinkage and more uniform properties upon curing than other materials having lower molecular weights, while the polymer backbone would also provide better chemical and moisture resistance, along with elasticity and compatibility with many man-made materials.

Radiation-curable materials are desirable for their ease of curing. Such materials include (meth)acrylic monomers from Henkel, vinyl monomers from BASF, oligomers of polyester acrylate, epoxy acrylate, and urethane acrylate from UCB Chemicals Corp. and acrylate-terminated PBD from Sartomer Co., as well as Ricacryl® 3100 and Ricacryl® 3500, methacrylated PBDs of Ricon Resins, Inc. A number of radiation-curable resins have also been described in the literature. Some of these are discussed in U.S. Patent Application No. 09/164,737, hereby incorporated by reference to the extent not inconsistent with the disclosure herein. U.S. Patent Application No. 09/164,737 discloses water-dispersible resins having a polymeric backbone with acrylate or vinyl ether substituents and an ionically bonded neutralizing agent.

The radiation-curable materials known to the art have many disadvantages. In general, ultraviolet curable coatings adhere to a narrow range of substrates and have low resistance to water, chemicals and solvents after curing. Those radiation-curable coatings designed to form hard coatings tend to form brittle coatings, and those designed to form flexible coatings tend to form coatings that are too soft. Many radiation-curable materials are mixtures of adhesion agents, dispersion agents, plasticizers, cross-linking agents and wetting agents which must be specially compounded at the site application. To promote properties such as chemical resistance, often a thermal post-curing (« baking ») is required, e.g., Cyracure from Union Carbide Corp. (UV-curable epoxy formulations with cationic initiators). Further, the radiation, thermal or oxidatively initiated curing materials known in the art do not produce a polymeric product with optimal adhesive properties to a variety of different types of materials such as metals and plastics.

To promote adhesion of resins to certain substances, adhesion agents have been used. European Patent Application n° 325 038 (1989) to Montgomery describes the use of unsaturated carboxylic acids of formula $R_2OCOR_1CO_2H$ where $R_1$ is -CH=CH-, -CMe=CMe-, -CMe=CH-, $-CH_2CH_2-$ or $-CH_2CH_2CH_2-$ and $R_2$ is a terminally mono- or poly-unsaturated group to promote the bonding of adhesives to proteinaceous substances such as human fingernails or toenails and livestock hooves.

Japanese Patent 57044638 (1982) to Adeka Argus Chemical Co., describes coating compositions which contain polyolefins, $H_3PO_4$ esters such as methacryloyloxyethyl phosphate or acryloyloxyethyl phosphate and dicarboxylic acid monoesters such as mono(methacryloyloxyethyl) maleate and mono (methacryloyloxyethyl) oxalate to promote adhesion to materials such as iron.

UV curable coatings on steel containing 10 or 5 mmoles monomer (acrylic acid, methacrylic acid, mono-4-(acryloyloxy)-butyl maleate or mono-2-(acryloyloxy)-ethyl maleate)/10g BGEDA (an epoxy-acrylic resin containing bisphenol-A-diglycidyl-ether-diacrylate and a reactive diluent (tri-propylene-glycol-diacrylate) in a 75/25 weight ratio) applied to a thickness of about 50 µm and cured with UV radiation have been described (Priola, A et al. (1987) Spec. Publ. - R. Spe. Chem. 64, pp. 143-160).

German Patent 2557536 (1987) to Wendrinsky, et al., describes the use of acid derivatives $R_1CH=C(R_2)COZ_1(CH_2)_nZ_2COZ_3CO_2H$ where $R_1$ and $R_2$ = H, Me ; $Z_1$ and $Z_2$ = O, NH ; $Z_3$ = C1-C7 alkylene, alkenylene, arylene, cycloalkylene ; and n = 1-6 as couplers to promote the adhesion of radical-cured coatings to metals.

None of the foregoing references describes a compound capable of being used as an adhesive or coating material which can adhere to a wide variety of substrates, and be cured by ultraviolet or other radiation or heat or oxidative treatment to a hard, tough and durable coating which is not soluble in water or other solvents such as toluene, acetone, gasoline and the like.

SUMMARY OF THE INVENTION

It has been discovered that the availability of a wide spectrum of strong and weak carboxyl groups attached to a polymeric molecule optimizes coating-substrate reactions enhancing adhesion of the polymer to various substances, including non-primed and not chemically, mechanically, flame-, plasma-, or otherwise pre-treated surfaces of glass, metals and plastics that are prone to the formation of covalent, ionic, hydrogen or other types of bonding. The varying

carboxyl functionalities are also designed to enhance the wetting of substrates by the uncured resin. The wide spectrum of strong and weak carboxyl groups attached to the polymeric molecule allows reactions with various substrates having different energies of the reactive sites. The reactivity of the carboxyl groups is suppressed upon curing, so that while still preserving a strong adhesive character in the cured resin, they do not destroy/rust the surface of the substrate.

It has also been discovered that coating-substrate reactions may be enhanced by the addition of an acidic synergist to the polymer. An acidic synergist is a substance that contains carboxyl groups with acid strength different from those of the polymer carboxyl groups.

By using polymers having carboxyl groups with varying strength and, if desired, one or more acidic synergists with appropriate acid properties, compounds may be produced with desired adhesion properties.

The resins of this invention provide a strong adhesive character making them suitable for use as primers or coatings to a wide variety of substances, including hard-to-adhere substrates in applications including those that require resistance to most solvents including water after curing. The compositions of this invention include the polymeric resins described herein with optional acidic synergists and may additionally include crosslink initiators and other additives known to the art.

The uncured polymeric resin compositions of this invention are polymer chains made up of segments having the general formula :

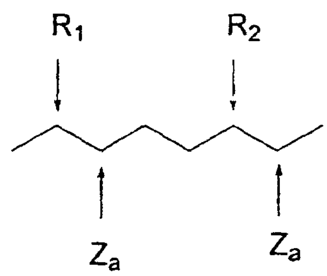

- wherein ∿∿∿ denotes a section of the polymeric backbone which is saturated or unsaturated and may contain one or more members selected from the group consisting of anhydride, amide, ether, ester, aryl and cyclic groups ;
- wherein the arrows denote that the pendant groups may be attached to the backbone at any point, and that varying quantities of the pendant groups may be present in each of the sections of each molecule of the polymeric resin ;
- wherein Z is a hydrocarbyl which does not substantially interfere with crosslinking or stability of the composition, and where a is 0 or 1 or 2 ;
- wherein $R_1$ is a group having a combination of chemically bound carboxyl and ester moieties (including ester-like moieties wherein O is substituted with S, N or P) ; and
- wherein $R_2$ is a group having a combination of chemically bound carboxyl moieties, said composition being mixted with an acidic synergist, said acidic synergist being a half ester of a dibasic acid or a cyclic anhydride that also contains a reactif insaturation.

Preferred examples of $R_1$ include :

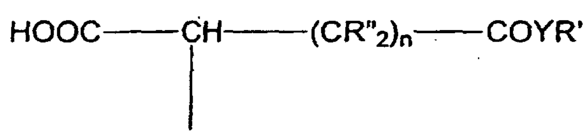

or

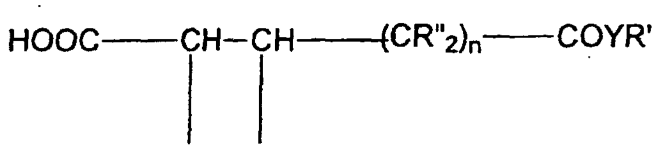

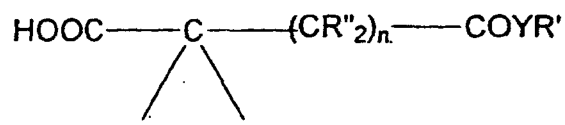

where R' is an unsaturation-containing moiety from an acrylic, methacrylic, allylic or vinyl ether compound ; and where R" is a non-nucleophil substituent ; where Y is -O, -N, -S or P ; and where n is an integer from 0 to 25. Preferably n is an integer from 1 to 5. More preferably R" is H and n is 1. Non-nucleophilic substituents include, but are not limited to, H, S, alkyl, aryl, alkoxy, amido, ester, ether, tert-amino, and carboxy.

R' contains a reactive unsaturation such as acrylate, methacrylate, allyl or vinyl ether, preferably a (meth) acrylate moiety, and most preferably an alkyl(meth)acrylic ester moiety (for example, $-OCH_2CH_2OC(O)C(CH_3)=CH_2$). A specific example of a more preferred $R_1$ group is :

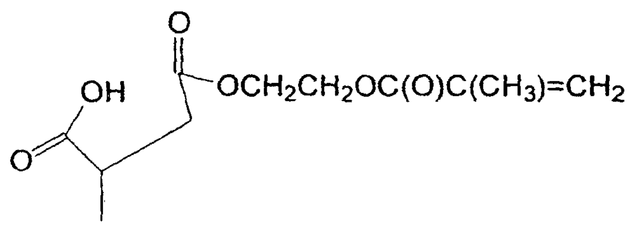

Preferably, $R_2$ is

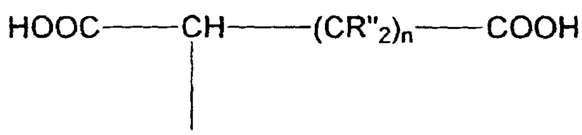

or

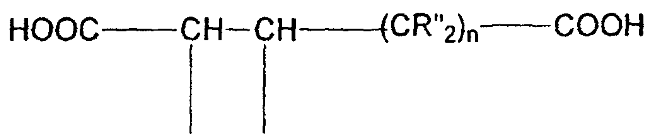

or

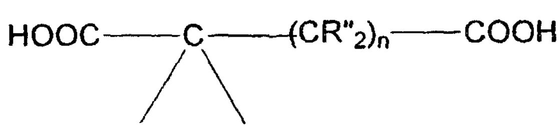

where R" is a non-nucleophilic substituent ; where n is an integer from 0 to 25. Most preferably n is an integer from 1 to 5. More preferably R" is H and n is 1. An example of a more preferred $R_2$ group is :

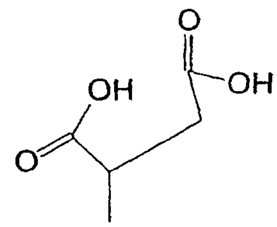

Preferably the polymeric backbone is a polybutadiene.

A group having a combination of chemically bound carboxyl moieties means that the group has 2 carboxyl moieties. A combination of chemically bound carboxyl and ester moieties means that both carboxyl and ester moieties are present in the same group. Thio-ester, amide or other such hereto-atom containing moieties (including P-containing moieties) may be used in place of ester moieties.

The length of the backbone polymer chains may be selected as desired. Preferably, the molecular weight of the composition is high enough to ensure low shrinkage at curing along with sufficient flexibility of the cured resins as needed for adhesion properties, but not as high as to limit the ability of polymer molecules to fill the pores and cavities of the substrate surface for an optimal interaction. A preferred molecular weight range is between about 1,000 and 300,000, preferably between about 2,000 and 100,000 as determined by gel permeation chromatography (GPC) or any other analytical method.

Preferably Z is H, alkyl, vinyl or alkyl vinyl, providing double bonds which contribute to the crosslinking of the composition ; however, Z may be any substituent which is not so bulky as to interfere with crosslinking and which does not make the composition unstable, i.e., does not provide so many double bonds that crosslinking occurs spontaneously or results in a cured composition more brittle than desired. Adjusting crosslink density by adjusting available sites is well known to the art and Z may be optimized for compositions of any desired properties by those skilled in the art.

Preferably the composition contains a sufficient concentration of acrylate groups with reactive unsaturation to provide fast curing and to add crosslinking density to the cured product for strength and resistance to solvents, chemicals and water, but no so high as to promote spontaneous crosslinking or provide a cured composition that is more brittle than desired, preferably between about 2 to about 15 moles of unsaturated moieties are present per mole.

One or more acidic synergists are blended with the polymer. Blends of adherent polymers with acidic synergists allow adhesion to a wider variety of surfaces than each one separately or in combinations with other radiation or thermally curable products known to the art of adhesives. Blends of polymers and acidic synergist have adhesion to extremely inert surfaces, for example, not primed and non-chemically or otherwise pretreated HDPE and polyolefins, and aid in adhesion to glass and specific metals, such as copper.

The acidic synergist is a molecule that contains an ester functionality, a reactive unsaturation, and a carboxyl functionality. The acidic synergist is a part-ester of a polybasic organic or inorganic acid or anhydride or a cyclic anhydride that also contains a reactive insaturation. More preferably the acidic synergist is a half-ester of a dibasic organic acid or a cyclic anhydride that also contains a (meth)acrylate functionality. An example of a preferred acidic synergist is a mono (methacryloyloxy)ethyl maleate. The acidic synergist is preferably present at a concentration sufficient to provide the resin with an adequate number and strength of carboxyl groups to adhesively bond to a desired substrate (i.e., between about 0.1 and 99 wt% of the entire composition). One or more different acidic synergists may be blended with a polymer to provide a wider variety of carboxyl functionality strengths.

The methods of making the resins of this invention comprise reacting a polymeric backbone having dicarboxylic acid anhydride and/or pendant carboxyl groups with water and/or one or more unsaturated compounds having a reactive substituent containing a labile hydrogen, such as -OH, -NH, or -SH group or a phosphorous compound to produce a compound having secondary and primary dibasic acid carboxyl functionalities and unsaturated half-ester carboxyl functionalities of different strength. If an anhydride is used, preferably it is succinic anhydride. Primary carboxyl functionality is that of a dibasic acid having higher acid strength than the other secondary carboxyl functionality of the same acid molecule. Both primary and secondary carboxyl functionalities result from the reaction of dicarboxylic acid anhydride with water. Half-ester carboxyl functionalities of different strength result from the reaction of dicarboxylic acid anhydride groups with one or more unsaturated compounds having a reactive substituent containing a labile hydrogen. Preferably the unsaturated compound having a reactive substituent containing a labile hydrogen is an acrylate or methacrylate, most preferably 2-hydroxyethylmethacrylate. The composition is preferably made by reacting a maleic anhydride of polybutadiene with an acrylate- or methacrylate-containing compound, .water and a half ester of a dibasic acid or a cyclic anhydride that also contains a (meth)acrylate functionality.

The amount and type of carboxyl groups present in the compositions of the invention may be selected to provide a desired adhesive property to the composition. Generally, compositions of the invention contain between

about 1 to about 50 moles, preferably between about 1 to about 10 moles of primary and secondary carboxyl groups, and between about 2 to about 100, preferably between about 2 to about 20 moles of half-ester carboxyl groups per mole, but other amounts and types of carboxyl groups may be used to tailor the composition so that it forms an adhesive bond or coats the desired substrate.

The resins of this invention may be dispersed in solvents, e.g., acetone, toluene, heptane, methylethylketone, isobutylketone, ethyl acetate, styrene, xylene or other aromatic or aliphatic solvents known to the art for application.

The resins of this invention are preferably mixed with crosslink initiators known to the art for initiation of radiation or thermal or oxidative curing, such as Irgacure 500, Irgacure 361, tertbutylperoxybenzoate, cumene hudroperoxide and cobalt (II) naphthenate.

The compositions of this invention may be cured by exposure to electromagnetic radiation such as ultraviolet (UV), infrared (IR), visible light, X-rays, gamma rays and microwaves, or electron beams (EB), or heat (temperatures preferably between about 50°C and about 200°C). Crosslink initiators such as free radical or ionic initiators known to the art are ususally required but may not be necessary for EB curing.

The materials of this invention cure to hard, water-insoluble, solvent-resistant materials.

Also provided herein are methods for forming an adhesive bond between two identical or different substrates (when using UV-radiation, one of the substrates is transparent for UV-light, e.g., glass) comprising applying to at least one substrate a composition of this invention, contacting the substrates so that the composition is between the substrates, exposing the composition between the substrates to radiation or other curing method as needed (through the UV-transparent substrate, when using UV-radiation). The method may also comprise the step of allowing the composition to adhesively cure between the substrates.

Also provided are substrates bonded together with a cured composition of the invention.

Also provided are methods of forming an adherent, cured polymeric coating on a substrate comprising :

(a) providing a composition as provided in the invention ;
(b) applying the composition to the substrate ;
(c) exposing the composition on the substrate to a suitable curing method.

The method may also comprise the step of allowing the composition to adhesively cure to the substrate. Also provided are substrates coated with a cured composition of the invention.

« Contacting » substances together means applying a sufficient force that enables an adhesive bond to form between the substances after a suitable curing procedure is performed.

The compositions of the invention may further comprise a carrier. Any liquid material in which the resins can be suspended, dispersed or dissolved for application (including reactive diluents, toluene and/or other organic solvents) may be used as a carrier. Preferably the concentration of the resin in the carrier is high enough to preserve adhesive properties of the composition. The concentration of the composition in the carrier may be between about 1% and about 99% by weight and preferably greater than about 40% by weight. The carrier may be a reactive diluent such as isobornyl acrylate (IBOA), hexanediol diacrylate (HDODA), trimethylolpropane triacrylate (TMPTA), or other suitable reactive diluent may be also used.

The term «cure» is an art-recognized term and means that sufficient cross-linking has occured so as to, e.g., provide an adequate adhesive bonding and joint strength of the cured composition tested by ASTM, such as Strenght Properties of Double Lap Shear Adhesive Joints, D 3528, or Standard Tape Test, D 3359, or provide a maximum torque reading (MH) when tested on a standard oscillating disk rheometer (ODR) at a chosen constant temperature. The process of curing results in a material that is hard, strong, and will not soften upon heating. An uncured composition of this invention is one which has not been subject to curing but which is capable of being cured.

The terms «polymer» and «polybutadiene polymer » as used herein include, but are not limited to, linear, branched or substituted polymers bearing non-interfering groups that do not prevent curing reactions or adversely affect the properties of the cured resin. Many such non-interfering groups will be readily apparent to those skilled in the art and include, but are not limited to, methyl, ethyl, benzyl, styryl, nitrile, tolyl, cyclohexyl, etc., and non-highly-reactive substituents and non-bulky substituents such as cyano or fluoro. The polymeric backbones useful in this invention may also contain such functional groups as anhydride, amide, ether, ester and other groups as known to the art that do not prevent desired adhesion or curing reactions.

The term « acrylate moieties » as used herein includes unsubstituted and substituted acrylate moieties, including but no limited to methacrylate and ethyl, propyl, fluoro, and silicone acrylate. Compounds comprising acrylate moieties useful for reacting with the polymeric backbones may have one or more acrylate moieties so long as the resin remains stable (does not spontaneously cure). Preferably, compounds comprising acrylate moieties have from one to twelve acrylate moieties. One or more compounds, having different numbers of acrylate moieties, may be reacted with the polymeric adducts to provide intermediate compounds having a desired number of acrylate moieties. The number of acrylate moieties should be sufficient to allow rapid cure with a crosslink density high enough to result in a cured

resin that is tough, resistant to water, solvents and chemicals and adheres well to a wide variety of surfaces, but not so great as to be brittle, unstable in the absence of radiation or heat, or to adversely affect the adhesive properties.

The term « hydrocarbyl » is used herein to refer generally to organic radicals comprised of carbon chains to which hydrogen and optionally other elements are attached. $CH_2$ or CH groups and C atoms of the carbon chains of the hydrocarbyl may be replaced with one or more heteroatoms (i.e., non-carbon atoms). Suitable heteroatoms include but are not limited to O, S, N and P atoms. The term hydrocarbyl includes, but is not limited to alkyl, alkenyl, alkynyl, ether, thioether, aminoalkyl, hydroxyalkyl, thioalkyl, aryl and heterocyclic aryl groups, groups which have a mixture of saturated and unsaturated bonds, carbocyclic rings and combinations of such groups. The term also includes straight-chain, branched-chain and cyclic structures or combinations thereof. Hydrocarbyl groups are optionally substituted. Hydrocarbyl substitution includes substitution at one or more carbons in the group by moieties containing heteroatoms. Suitable substituents for hydrocarbyl groups include but are not limited to OH, SH, $NH_2$, COH, $CO_2H$, $OR_a$, $SR_a$, $NR_aR_b$, $CONR_aR_b$, and halogens where $R_a$ and $R_b$ independently are alkyl, unsaturated alkyl or aryl groups.

The term « alkyl » takes its usual meaning in the art and is intended to include straight-chain, branched and cycloalkyl groups. The term includes, but is not limited to, methyl, ethyl, n-propyl, isopropyl, n-butyl, sec-butyl, isobutyl, tert-butyl, n-pentyl, neopentyl, 2-methylbutyl, 1-methylbutyl, 1-ethylpropyl, 1,1-dimethylpropyl, n-hexyl, 1-methylpentyl, 2-methylpentyl, 3-methylpentyl, 4-methylpentyl, 3,3-dimethylbutyl, 2,2-dimethylbutyl, 1,1-dimethylbutyl, 2-ethylbutyl, 1-ethylbutyl, 1,3-dimethylbutyl, n-heptyl, 5-methylhexyl, 4-methylhexyl, 3-methylhexyl, 2-methylhexyl, 1-methylhexyl, 3-ethylpentyl, 2-ethylpentyl, 1-ethylpentyl, 4,4-dimethylpentyl, 3,3-dimethylpentyl, 2,2-dimethylpentyl, 1,1-dimethylpentyl, n-octyl, 6-methylheptyl, 5-methylheptyl, 4-methylheptyl, 3-methylheptyl, 2-methylheptyl, 1-methylheptyl, 1-ethylhexyl, 1-propylpentyl, 3-ethylhexyl, 5,5-dimethylhexyl, 4,4-dimethylhexyl, 2,2-diethylbutyl, 3,3-diethylbutyl, and 1-methyl-1-propylbutyl. Alkyl groups are optionally substituted. Lower alkyl groups are $C_1$-$C_6$ alkyl and include among others methyl, ethyl, n-propyl, and isopropyl groups.

The term « cycloalkyl » refers to alkyl groups having a hydrocarbon ring, preferably to those having rings of 3 to 7 carbon atoms. Cycloalkyl groups include those with alkyl group substitution on the ring including other ring structures. Cycloalkyl groups can include straight-chain and branched-chain portions. Cycloalkyl groups include but are not limited to cyclopropyl, cyclobutyl, cyclopentyl, cyclohexyl, cycloheptyl, cyclooctyl, and cyclononyl. Cycloalkyl groups can optionally be substituted.

Compounds possessing substantially the same properties as the unsubstituted aryl compounds of this invention and which can be prepared in the same manner and are equivalents thereof are those wherein the aryl group bears one, two or more simple substituents including, but not limited to, lower alkyl, e.g., methyl, ethyl, butyl ; halo, e. g., chloro, bromo ; nitro ; sulfato ; sulfonyloxy ; carboxy ; carbo-lower-alkoxy, e.g., carbomethoxy, carbethoxy ; amino ; mono- and di-lower-alkylamino, e.g., methylamino, ethylamino, dimethylamino, methylethylamino ; amido ; hydroxy ; lower-alkoxy, e.g., methoxy, ethoxy ; and lower-alkanoyloxy, e.g., acetoxy.

The term « unsaturated alkyl » group is used herein generally to include alkyl groups in which one or more carbon-carbon single bonds have been converted to carbon-carbon double or triple bonds. The term includes alkenyl and alkynyl groups in their most general sense. The term is intended to include groups having more than one double or triple bond, or combinations of double and triple bonds. Unsaturated alkyl groups include, without limitation, unsaturated straight-chain, branched or cycloalkyl groups. Unsaturated alkyl groups include without limitation : vinyl, allyl, propenyl, isopropenyl, butenyl, pentenyl, hexenyl, hexadienyl, heptenyl, cyclopropenyl, cyclobutenyl, cyclopentenyl, cyclopentadienyl, cyclohexenyl, cyclohexadienyl, 1-propenyl, 2-butenyl, 2-methyl-2-butenyl, ethynyl, propargyl, 3-methyl-1-pentynyl, and 2-heptynyl. Unsaturated alkyl groups can optionaly be substituted.

Substitution of alkyl, cycloalkyl and unsaturated alkyl groups includes substitution at one or more carbons in the group by moieties containing heteroatoms. Suitable substituents for these groups include but are not limited to OH, SH, $NH_2$, COH, $CO_2H$, $OR_c$, $SR_c$, $NR_cR_d$, $CONR_cR_d$, and halogens, particularly chlorines and bromines where $R_c$ and $R_d$, independently, are alkyl, unsaturated alkyl or aryl groups. Preferred alkyl and unsaturated alkyl groups are lower alkyl, alkenyl or alkynyl groups having form 1 to about 3 carbon atoms.

The term « aryl » is used herein generally to refer to aromatic groups which have at least one ring having a conjugated pi electron system and includes without limitation carbocyclic aryl, aralkyl, heterocyclic aryl, biaryl groups and heterocyclic biaryl, all of which can be optionally substituted. Preferred aryl groups have one or two aromatic rings.

« Carbocyclic aryl » refers to aryl groups in which the aromatic ring atoms are all carbons and includes without limitation phenyl, biphenyl and naphthalene groups.

« Aralkyl » refers to an alkyl group substituted with an aryl group. Suitable aralkyl groups include among others benzyl, phenethyl and picolyl, and may be optionally substituted. Aralkyl groups include those with heterocyclic and carbocyclic aromatic moieties.

« Heterocyclic aryl groups» refers to groups having at least one heterocyclic aromatic ring with from 1 to 3 heteroatoms in the ring, the remainder being carbon atoms. Suitable heteroatoms include oxygen, sulfur, and nitrogen with controlled basicity. Heterocyclic aryl groups include among others furanyl, thienyl, pyridyl, pyrrolyl, N-alkyl pyrrolo, pyrimidyl, pyrazinyl, imidazolyl, benzofuranyl, quinolinyl, and indolyl, all optionally substituted.

« Heterocyclic biaryl » refers to heterocyclic aryls in which a phenyl group is substituted by a heterocyclic aryl group ortho, meta or para to the point of attachment of the phenyl ring to the decalin or cyclohexane. Heterocyclic biaryl includes, among others, groups which have a phenyl group substituted with a heterocyclic aromatic ring. The aromatic rings in the heterocyclic biaryl group can be optionally substituted.

« Biaryl » refers to carbocyclic aryl groups in which a phenyl group is substituted by a carbocyclic aryl group ortho, meta or para to the point of attachment of the phenyl ring to the decalin or cyclohexane. Biaryl groups include among others a first phenyl group substituted with a second phenyl ring ortho, meta or para to the point of attachment of the first phenyl ring to the decalin or cyclohexane structure. Para substitution is preferred. The aromatic rings in the biaryl group can be optionally substituted.

Aryl group substitution includes substitutions by non-aryl groups (excluding H) at one or more carbons or where possible at one or more heteroatoms in aromatic rings in the aryl group. Unsubstituted aryl, in contrast, refers to aryl groups in which the aromatic ring carbons are all substituted with H, e.g. unsubstituted phenyl ($-C_6H_5$), or napthyl ($-C_{10}H_7$). Suitable substituents for aryl groups include among others, alkyl groups, unsaturated alkyl groups, halogens, OH, SH, $NH_2$, COH, $CO_2H$, $OR_e$, $SR_e$, $NR_eR_f$, $CONR_eR_f$ where $R_e$ and $R_f$ independently are alkyl, unsaturated alkyl or aryl groups. Preferred substituents are OH, SH, $OR_e$ and $SR_e$ where $R_e$ is a lower alkyl, i.e. an alkyl group having from 1 to about 3 carbon atoms. Other preferred substituents are halogens, more preferably chlorine or bromine, and lower alkyl and unsaturated lower alkyl groups having from 1 to about 3 carbon atoms. Substituents include bridging groups between aromatic rings in the aryl group, such as $-CO_2-$, -CO-, -O-, -S-, -NH-, -CH=CH- and $-(CH_2)_1-$ where 1 is an integer from 1 to about 5, and particularly $-CH_2-$. Examples of aryl groups having bridging substituents include phenylbenzoate. Substituents also include moieties, such as $-(CH_2)_1-$, $-O-(CH_2)_1-$ or $-OCO-(CH_2)_1-$, where 1 is an integer from about 2 to 7, as appropriate for the moiety, which bridge two rings atoms in a single aromatic ring as, for example, in a 1, 2, 3, 4-tetrahydronaphthalene group. Alkyl and unsaturated alkyl substituents of aryl groups can in turn optionally be substituted as described *supra* for substituted alkyl and unsaturated alkyl groups.

The terms « alkoxy group » and « thioalkoxy group » (also known as mercaptide groups, the sulfur analog of alkoxy groups) take their generally accepted meaning. Alkoxy groups include but are not limited to methoxy, ethoxy, n-propoxy, isopropoxy, n-butoxy, sec-butoxy, isobutoxy, tert-butoxy, n-pentyloxy, neopentyloxy, 2-methylbutoxy, 1-methylbutoxy, 1-ethylpropoxy, 1,1-dimethylpropoxy, n-hexyloxy, 1-methylpentyloxy, 2-methylpentyloxy, 3-methylpentyloxy, 4-methylpentyloxy, 3,3-dimethylbutoxy, 2,2-dimethoxybutoxy, 1,1-dimethylbutoxy, 2-ethylbutoxy, 1-ethylbutoxy, 1,3-dimethylbutoxy, n-pentyloxy, 5-methylhexyloxy, 4-methylhexyloxy, 3-methylhexyloxy, 2-methylhexyloxy, 1-methylhexyloxy, 3-ethylpentyloxy, 2-ethylpentyloxy, 1-ethylpentyloxy, 4,4-dimethylpentyloxy, 3,3,-dimethylpentyloxy, 2,2-dimethylpentyloxy, 1,1,-dimethylpentyloxy, n-octyloxy, 6-methylheptyloxy, 5-methylheptyloxy, 4-methylheptyloxy, 3-methylheptyloxy, 2-methylheptyloxy, 1-methylheptyloxy, 1-ethylhexyloxy, 1-propylpentyloxy, 3-ethylhexyloxy, 5,5-dimethylhexyloxy, 4,4-dimethylhexyloxy, 2,2-diethylbutoxy, 3,3-diethylbutoxy, 1-methyl-1-propylbutoxy, ethoxymethyl, n-propoxymethyl, isopropoxymethyl, sec-butoxymethyl, isobutoxymethyl, (1-ethyl propoxy)methyl, (2-ethylbutoxy) methyl, (1-ethylbutoxy)methyl, (2-ethylpentyloxy)methyl, (3-ethylpentyloxy)methyl, 2-methoxyethyl, 1-methoxyethyl, 2-ethoxyethyl, 3-methoxypropyl, 2-methoxypropyl, 1-methoxypropyl, 2-ethoxypropyl, 3-(n-propoxy)propyl, 4-methoxybutyl, 2-methoxybutyl, 4-ethoxybutyl, 2-ethoxybutyl, 5-ethoxypentyl, and 6-ethoxyhexyl. Thioalkoxy groups include but are not limited to the sulfur analogs of the alkoxy groups specifically listed *supra.*

« Optional » or « optionally » means that the subsequently described event or circumstance may or may not occur, and that the description includes instances where said event or circumstance occurs and instances in which it does not. For example « optionally substituted phenyl » means that the phenyl radical may or may not be substituted and that the description includes both unsubstituted phenyl radicals and phenyl radicals wherein their is substitution.

DETAILED DESCRIPTION OF THE INVENTION

In a preferred embodiment, adherent resins of this invention are formed by reacting a polybutadiene adduct of maleic anhydride, having segments as show below :

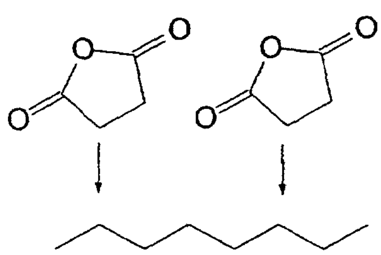

where /\/\/\/ denotes a section of the polymeric backbone which may be saturated or unsaturated and the arrows indicate that the pendant groups may be attached to the backbone at any point, and that varying quantities of the pendant groups may be present in each of the sections of the polymeric adduct ;

with a hydroxyl acrylate- or methacrylate-containing moiety such as 2-hydroxyethyl methacrylate (HEMA) :

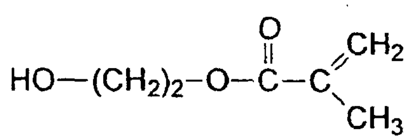

and water through the anhydride ring opening reaction to form a compound having segments of the structure :

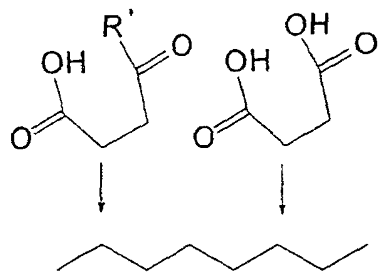

where R' is an acrylate- or methacrylate-containing moiety.

In other embodiments, other polymeric backbones may be adducted to other anhydride moieties and reacted with other compounds having reactive unsaturation and water by analogous reactions.

In a preferred embodiment, the ring-opening reaction with water produces two carboxylic groups forming the attached succinic (butanedioic) acid (SA).

Carboxylic groups of dicarboxylic acids differ in strength, e.g., free SA has two acid-dissociation constants having values at 25°C of $K_1 = 6.89 \times 10^{-5}$ and $K_2 = 0.245 \times 10^{-5}$ (Handbook of Chemistry and Physics, 47th Edition, CRC, 1966-1967). Although the large PBD backbone affects the reactivity of different carboxyl groups of the molecule, it does not eliminate differences in their performance.

As will be apparent to those skilled in the art, catalysts for reacting the acrylate compounds and water with the anhydride of the polymer may be required, as known to the art. The reactions may be conducted with or without solvents, and other reactions conditions may be varied depending on the compounds being used, all as known to the art.

Polymeric adducts useful for this invention are made using any polymeric resin capable of forming or containing a monocarboxylic, dicarboxylic or polycarboxylic acid or derivative adduct. A preferred polymeric resin is an unsaturated polymer comprising at least one monomer which is a conjugated diene containing 4-12 carbon atoms. The polymer may additionally comprise a monomer which is a vinyl-substituted aromatic compound containing carbon atoms. Polybutadiens are preferred polymers. A preferred polymer is a random 1,2- or 1,4-polybutadiene homopolymer preferably containing from about 0 to about 99 percent 1,2 vinyl groups and from about 1 to about 100 percent cis- and trans-1,4 groups. Unless specified otherwise, as used herein such percents are percents of total unsaturation of the resin. Preferably the polymer comprises a mixture of 1,2 and 1,4 modes of addition and contains cis and trans unsaturation in the backbone of the polymer chain and vinyl unsaturation pendant to the polymer chain. Linear or branched homo- and co-polymers of dienes, e.g. substituted butadiene, isoprene and chloroprene, cyclic and polycyclic unsaturated hydrocarbons, e.g., cyclododecatriene, norbornene, cyclooctadiene and substituted homologs and olefins, e.g., butene and styrene, can also be used as a backbone. In addition, polymeric adducts can be made using backbones of unsaturated longer chain aliphatic compounds such as ethylene propylene diene (EPDM), partially unsaturated polyethylene, naphthaleneic or paraffinic oils. Synthetic drying oils known to the art from which adducts may be produced may be made by polymerization of other materials including myracene, cyclopentadiene and higher homologs up to about $C_{20}$ or co-polymers of these monomers with each other in any ratio, or copolymers made with other vinyl-reactive monomers such as styrene, vinyl toluene, divinyl benzene, vinyl chloride, vinylidene dichloride, acrylonitrile, etc.

The polymeric adducts useful in this invention may also be made from naturally occuring, renewal-resource-based unsaturated drying oils including linseed oil, tung oil, soy oil, castor oil, cashew oil, and other such oils commonly used in the coatings industry to manufacture air-drying paints and coatings.

Unsaturated dimers and trimers made by heating tall oil may also be used to make the polymeric adducts useful in this invention.

To make the adducts, adductable materials such as organic acid or derivative materials such as anhydrides may be used. Maleic anhydrides are especially suitable, however, other organic acids, anhydrides and derivatives capable of being adducted to the polymeric backbones described herein are known to the art or may be ascertained without undue experimentation. Such adductable materials include alpha, beta-ethylenically unsaturated dicarboxylic acid compounds represented by the following general formula :

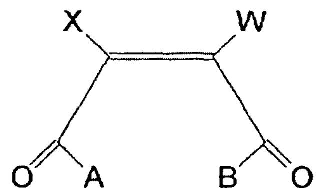

wherein :

- X and W are hydrogen atoms, alkyl groups, or other non-bulky substituents which do not interfere with the adduction reaction of these compounds to the backbone polymer, and may be the same of different ; and
- A and B are hydroxyl groups, alkoxyl groups, alkylsubstituted amine groups or an -O- bond formed by linking A and B together through a bonded oxygen or an -N(-R)- bond, where R may be alkyl or hydrogen, formed by linking A and B together through an imide linkage.

These alpha, beta-ethylenically unsaturated dicarboxylic acid compounds include anhydrides of maleic acid such as maleic anhydride, and esters of maleic acid such as monomethyl maleic acid, dimethyl maleic acid and diethyl maleic acid, and those having 12 or less carbon atoms in each molecule may be most advantageously used. Such derivatives may also include maleamides such as N',N'-dimethyl diamide of maleic acid and maleimide. These dicarboxylic acid compounds and derivatives are capable of being adducted at weight percent levels of less than 1% to as much as about 95%. Preferably the adducted moiety comprises between about 3% and about 30% of the polymeric adduct weight. Methods of making adductable materials is known in the art, for example, in United States Patent N° 5,300,569 (April 5, 1994) to Drake, R.E. et al.

Preferred polymeric adducts useful in this invention may be formed by adducting maleic anhydride (MA) to a high vinyl polybutadiene (PBD) resin having more than 30%, and preferably about 70% vinyl. Suitable PBDs include but are not limited to Ricon 157, Ricon 154 or Ricon 130, preferably Ricon 157, from Ricon Resins, Inc., Grand Junction, CO. Preferably the PBD is adducted to contain about 17% wt MA. Suitable adducted PBDs include maleinized PBDs from Ricon Resins, Inc. such as Ricon® FX9925.

The term « unsaturated backbone » in reference to the polymer used to make the adduct means that the polymer contains double and/or triple bonds in the backbone (continuous portion) of the molecule. Preferably, the polymer backbone contains between about 5 and about 40 unsaturated bonds per about 2000 g/M in the preferred embodiment of the invention, preferably double bonds.

The polymeric adduct contains dicarboxylic acid anhydride rings or pendant carboxyl groups. In the preferred embodiments, such pendant groups are succinic acid anhydrid rings which are the maleic rings which have become saturated upon reacting with the PBD backbones, and thus become succinic anhydride rings. The preferred embodiment also comprises pendant ethylene groups in an amount of between about 3 and about 37 per 3000 g/M of the preferred embodiment.

Suitable polymeric adducts for use in this invention are commercially available or may be made by processes known to the art, e.g. as disclosed in U.S. Patent N° 5,300,569 incorporated herein by reference to the extent not inconsistent herewith.

The carboxyl groups present in compounds of the invention are covalently bonded to the backbone of the polymeric adduct, preferably by a reaction in which anhydride ring structures are opened. Reactions to add two or more separate carboxyl groups to the polymer backbone can take place simultaneously.

The desired amount of carboxyl moieties can be most easily achieved by using a ratio of acrylate- or methacrylate-containing compound to water of between about 200:1 to about 1:5 by weight. The preferred embodiment comprises the ratio of methacrylate-containing compound to water of between about 30:1 to about 5:1 by weight.

More than one different acrylate- or methacrylate-containing compound may be used in any given polymer.

Pendant 1,2-vinyl groups as well as the 1,4-unsaturations on the polybutadiene backbone participate in initiated curing reactions along with the selected acrylate/methacrylate monomers, generating a high density of crosslinking. Higher density of crosslinking translates into a very hard material (5H and higher hardness, when measured by ASTM Pencil Test Method D 3363) that also exhibits extreme resistance to hot and cold water as well as a wide variety of solvents and chemicals. PBD resins that are true polymeric in nature ($M_N$> 1,000 g/m, such as those available from Ricon Resins) in contrast to other coating materials known in the industry result in lower shrinkage upon curing and more uniform coating properties. A polymer chain of the material described in herein consists of 25 to 50 moles of monomer (DP = 25-50) as opposed to commercial oligomer chains known to the industry having only 3 to 5 moles (DP = 3-4).

This invention provides a single molecule having adhesion functionality (provided primarily by the different levels of acidity provided in the molecule), flexibility (provided primarily by the polymeric backbone), and the capacity to be cured by ultraviolet radiation or other means (provided primarily by the pendant reactive unsaturations and/or vinyl moieties and backbone unsaturations).

Preferred embodiments of this invention also provide methods for making adherent, radiation-curable polymeric compositions as described above comprising reacting a polymeric adduct having an unsaturated backbone, pendant dicarboxylic acid anhydride rings, and pendant vinyl groups, with one or more compounds having a reactive proton (H) and (meth)acrylate moieties and water, to open pendant anhydride rings and covalently bond a moiety having one or more acrylate groups to one carbonyl carbon of a first opened ring while a reactive proton (H) forms a carboxyl group on the other carbonyl carbon of the first opened ring. Water opens a second ring to form two different carboxyl groups on the second opened ring. Thus an uncured polymeric intermediate compound is formed with different acrylate substituents and different carboxyl groups, depending on the identity and concentration of the acrylate groups and water reacted.

Reactions to add the acrylate substituents and water to the polymeric backbone may be performed by means known to the art using catalysts including but not limited to tertiary amines preferably at temperatures not greater than about 90°C to reduce the possibility of crosslinking reactions that cause gelling.

The uncured resins can be applied to a variety of substrates by methods known to the art including, but not limited to, spraying, roll-coating, curtain-coating, dip-coating, etc.

The radiation-curable resins of this invention are useful in a wide range of applications. They are particularly useful for adhesives, surface modification and coatings, for example, as a tie layer of primer coat on one surface allowing adhesion of another coating, adhesive or sealant to a surface to which it does not readily adhere alone. They can be used as glass, metal and plastic laminates, glass fiber composite adhesives, PSA and sealants. They also improve moisture and scratch resistance, gloss, hardness and thermal resistance. They may be clear or pigmented, and may be used for wood or floor finishes and stains, for biosensor and electrode coatings and coatings for optical fibers. They may also be used for realease coatings, antistatic coatings, foamed or insulated coatings, protective coatings and thermotropic gel layers for windows. Surface treatment applications include cell-repellant treatments and photografting.

These materials are capable of adhesively bonding during curing to a wide variety of substrates and are useful in a broad range of applications. They may be used as coatings, ink resins, adhesives and sealants, primers, adhesion promoters, 3D-imaging / stereolithographic resins, dental and medical materials, coatings for electronic applications, solder masks, photoresists, anaerobic adhesives and photo-developable polymers used, for example, in printing plates.

They may also be fabricated, e.g., by curing in a suitable mold, into such products as aspherical lenses, contact lenses and the like. Rapid prototyping can be done using such materials. The cured materials of this invention may also be micromachined.

The resins of this invention may also be mixed with conventional curing agents such as sulfur if curing by conventional means is desired. Oven-curing may be done, or if a curing agent such as a peroxide which is unstable at room temperature is used, the material should harden without application of heat.

The resin compositions of this invention may be applied to any substrate (surface) desired including, but not limited to, surfaces of plastics, rubbers, metals, wood, cloth, fibers, stone, paper, ceramics, concrete, glass and fabric. Some particular applications include use as an adhesive, a primer or protective coating on a wide variety of substrates, including hard-to-adhere substrates such as window glass, Nylon and copper.

Such resins are useful in lithographic and flexographic printing plates as well as laser-imageable plates, and in pre-press materials in surprint/overlay/monochrome systems, thermal imaging systems and digital imaging systems. They may also be used in inks where ultraviolet (UV) or electron-beam (EB) curable materials are required for printing methods including flexo, screen, litho, gravure, letterset, offset, and other such systems.

Electronic applications include the use of these materials as film resists, electroless plating resists, liquid resists, electrodeposition resists, solder masks, polyimide interlayer insulator films and flexible photo-imageable permanent coatings. For integrated circuits, these materials may be used as deep UV resists, E-Beam resists, microlithography, insulating and conductive pastes, as well as in selectively deposited conductive polymer systems.

Optical applications include use in liquid crystal (LC) systems for alignment of LC elements of orientation of ferro-electric materials, formation of LC polymers, and color filters for liquid crystal displays and in the formation of optical waveguides and polarizing optical elements for nonlinear optical systems as well as for microoptical systems. The materials may also be used in systems involving holographic polymer elements, components used for reversible holograms and switched holographic gratings (with LC).

The resins may also be used for rewritable recording materials (e.g. photochromic materials), and for information recording in laser ablation systems.

Medical and dental uses include uses in composite fillings, surface coatings/fillings, and the formation of impressions. They may be added to implantable bone protheses, used to make UV-curable splints and casts, and for immobilization of enzymes and microorganisms. They may also be used for contact lenses.

In membrane technology, the materials may be used to make reverses osmosis membranes, gas-permeable membranes, amphophilic membranes and ultrafiltration membranes and modifications.

Other uses include use in battery parts that require protective coatings with high resistivity.

The following examples are intended as illustrations, not limitations.

## EXAMPLES

### Example 1. (invention) Preparation of adherent polymer (Ricacryl® 3803) via ring opening reaction

Hydroxyethyl methacrylate (HEMA) in the amount of 15.3 grams, and water in the amount of 0.71 grams are reacted with 91.7 grams of maleinized PBD resin containing 16.77% by weight of adducted maleic anhydride at 85°C during 6 hours in presence of a tertiary amine catalyst. The reaction yield of 97.2% found by GC analysis of unreacted monomers.

### Exemple 2. (invention) Preparation of adherent polymer/synergist blend

A blend of Ricacryl® 3803 with a synergist, for example, mono-(methacryloyloxy)ethyl maleate (HEMA-MA) is prepared by the procedures described below.

$$HOC\ (O)\text{-}CH_2CH_2C(O)OCH_2CH_2OC(O)C\ (CH_3)\text{=}CH_2$$

HEMA-MA

2.1. HEMA-MA may be prepared in situ by reacting a desired amount of maleic anhydride and a stoichiometric amount of HEMA in excess of HEMA sufficient for preparation of a desired amount of Ricacryl® 3803 via continous process. To prepare a 70:30 by weight polymer/synergist blend, 115.6 grams of HEMA and 74.4 grams of MA were reacted at 85°C during 4 hours in presence of a tertiary amine catalyst. The HEMA-MA yield of 97.8% was found by FTIR analysis of unreacted MA. 300 grams of Ricon® FX9902 resin containing 12.96% wt. of adducted MA and 1.43 grams of water were then added to the reactor and allowed to react for another 4 hours. Final reaction yield of 97.15% found by GG analysis of unreacted monomers.

2.2. Alternatively, the HEMA-MA may be purchased (Aldrich) and added to the polymer.

To prepare 70:30 by weight polymer/synergist blend, a desired amount, e.g., 70 grams of Ricacryl® 3803 resin having Brookfield Viscosity @ 45°C of 38 Pa.s (38,000 cps), is added to a reactor along with 30 grams of HEMA-MA having Brookfield Viscosity @ 25°C of 0.3 Pa.s (300 cps), and mixed at 50°C for about 2 hours or until a uniform condition.

### Exemple 3. (invention) Performance Properties of adherent polymer resins

Compositions of this invention were tested for adhesion properties on a variety of substrates. Ricacryl® 3803 was prepared by the method described in Example 1 of the invention. Polymer/synergist blends were prepared by the methods described in Example 2.2 of the invention. A 25 micron thick coating of the resin containing Irgacure® 500 photoinitiator (Ciba) was applied to a flat surface of different materials and immediately cured using one pass in UV light at 12.7 Joules/$cm^3$ energy dose. Adhesion was tested according to ASTM D-3359. Results are set forth in Table 1.

TABLE 1

Adhesion of Ricacryl® 3803 Resin and its Blends with *mono*-(Methacryloyloxy)ethyl Maleate (HEMA-MA) to Different Substrates

| No. | Substrate | Adhesive Composition | | |
|---|---|---|---|---|
| | | Ricacryl® 3803 – 100 pts. Irgacure® 500 - 5 pts | Ricacryl® 3803 – 80pts. HEMA-MA – 20 pts Irgacure® 500 - 5 pts | Ricacryl® 3803 – 70pts. HEMA-MA – 30 pts Irgacure® 500 - 5pts |
| 1 | Galvanized Steel | 100% | 0% | 0% |
| 2 | Tinplated Steel | 100% | 0% | 0% |
| 3 | Brass | 100% | 0% | 0% |
| 4 | Copper | 0% | 100% | 100% |
| 5 | Glass | 0% | 70% | 100% |
| 6 | BMC* | 0% | 0% | 90% |
| 7 | HDPE | 0% | 0% | 100% |
| 8 | Nylon 6/6 | 70% | 100% | 100% |
| 9 | Polished Aluminum | 100% | 100% | 100% |
| 10 | Carbon Steel | 100% | 100% | 100% |
| 11 | Stainless Steel | 100% | 100% | 100% |

* BMC is a difficult-to-adhere proprietary glass-filled thermoplastic compound from Bulk Molding Compounds Co.

Example 4. (comparative) Comparison of Performance Properties with other Products

The effect of HEMA-MA on the adhesion of typical UV curable acrylated epoxy and urethane oligomers, Ebecryl® 3700-acrylated epoxy oligomer; and Ebecryl® 6700-acrylated urethane oligomer produced by UCB Chemicals Corp. of Smyrna, GA was investigated. The results are set forth in Table 2.

TABLE 2

Adhesion of Typical Industrial Oligomers and their Blends with *mono*-(methacryloyloxy)ethyl maleate (HEMA-MA) to Different Substrates

| No. | Substrate | Adhesive Composition | | | |
|---|---|---|---|---|---|
| | | Ebecryl® 3700 – 100 pts. Irgacure® 500 – 5 pts. | Ebecryl® 3700 – 70 pts. HEMA-MA - 30 pts. Irgacure® 500 - 5pts. | Ebecryl® 6700 – 100 pts. Irgacure® 500 – 5 pts. | Ebecryl® 6700 – 70pts. HEMA-MA - 30 pts Irgacure® 500-5pts |
| 1 | Galvanized Steel | 0% | 0% | 0% | 0% |
| 2 | Tinplated Steel | 0% | 0% | 0% | 0% |
| 3 | Brass | 0% | 0% | 0% | 80% |
| 4 | Copper | 0% | 0% | 0% | 30% |
| 5 | Glass | 0% | 0% | 0% | 30% |
| 6 | BMC | 0% | 0% | 0% | 0% |
| 7 | HDPE | 0% | 0% | 0% | 0% |
| 8 | Nylon 6/6 | 0% | 0% | 0% | 0% |
| 9 | Polished Aluminum | 0% | 0% | 0% | 30% |
| 10 | Carbon Steel | 0% | 0% | 0% | 60% |
| 11 | Stainless Steel | 0% | 0% | 0% | 60% |

Example 5. (invention) Bonding of Different Substrates with UV-cured Polymer/Synergist Blend

The polymer/synergist blend was prepared by the method described in Example 2.1 of the invention. The ability of the polymer/synergist blend to adhesively bond different substrates in UV-curing was investigated via lap-shear bond strength measurements [ASTM, D 3528]. The results are set forth in Table 3.

TABLE 3

| Adhesive Joint Strength Measured by Lap-Shear Test | | |
|---|---|---|
| Substrates | Adhesive Bond Strength psi | Type of Break |
| Glass-to-Copper | 254 | Glass |
| Glass-to Stainless Steel | 145 | Glass |
| Glass-to-Aluminum | 214 | Glass |
| Glass-to-Nylon 66 | 103 | Glass |
| Glass-to-Brass | 260 | Glass |
| Glass-to-Glass | 349 | Glass |
| Glass-to-BMC | 322 | Adhesive at BMC Surface |

As shown by the above examples and test results, it is possible, with the present invention, to produce a resin having adherent properties comparable to or better than that of previously-known resins. The embodiments described herein are merely exemplary and changes and modifications in the specifically described embodiments can be carried out by one skilled in the art without departing from the scope of the invention. Applicants do not wish to be bound by the theory presented herein. All such changes and modifications are intended to be included within the scope of the invention as defined in the appended claims. All references cited herein are hereby incorporated by reference to the extent not inconsistent with the disclosure therein.

## Claims

**1.** An uncured polymeric resin composition comprising a polymer chain made up of segments having the general formula :

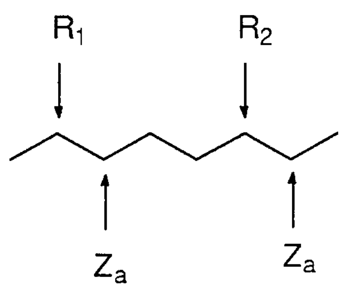

- wherein /\/\/\/ denotes a section of the polymeric backbone which is saturated or unsaturated and may contain one or more members selected from the group consisting of anhydride, amide, ether, ester, aryl and cyclic groups ;
- wherein the arrows denote that the pendant groups may be attached to the backbone at any point, and that varying quantities of the pendant groups may be present in each of the sections of each molecule of the polymeric resin ;
- wherein Z is a hydrocarbyl which does not substantially interfere with crosslinking or stability of the composition, and where a is 0 or 1 or 2 ;
- wherein $R_1$ is a group having a combination of chemically bound carboxyl and ester, thio-ester, or amide moieties ; and
- wherein $R_2$ is a group having a combination of chemically bound carboxyl moieties,

said composition being mixed with an acidic synergist, said acidic synergist being a half ester of a dibasic acid or a cyclic anhydride that also contains a reactive insaturation.

**2.** The composition according to claim 1, wherein $R_1$ is :

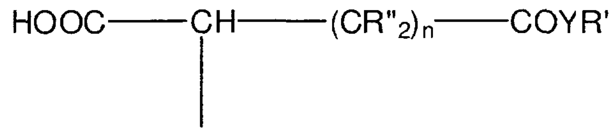

or

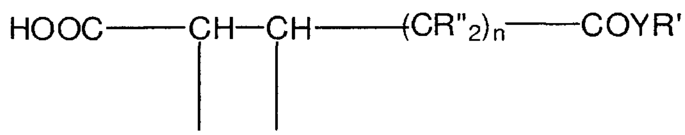

or

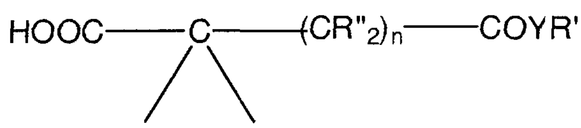

wherein R' is an unsaturation-containing moiety from an acrylic, methacrylic, allylic or vinyl ether compound ;
wherein R'' is a non-nucleophilic substituent ;
wherein n is an integer from 0 to 25 ;
wherein Y is -O, -N, -S or P ;
and wherein $R_2$ is

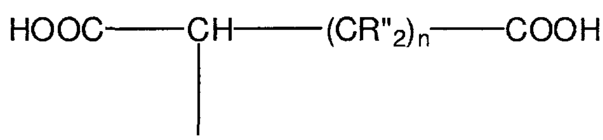

or

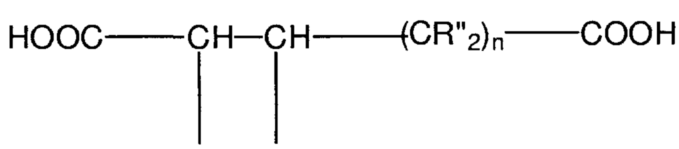

or

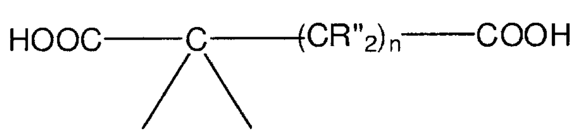

wherein R'' is a non-nucleophilic substituent ; and
wherein n is an integer from 0 to 25.

3. The composition according to claim 1 or claim 2 wherein a is 0.

4. The composition according to anyone of claims 1 to 3, wherein said polymeric backbone is polybutadiene.

5. The composition according to anyone of claims 1 to 4, wherein said resin composition has a molecular weight between about 1,000 and about 300,000.

6. The composition according to anyone of claims 1 to 5, wherein said resin composition has a molecular weight between about 2,000 and about 100,000.

7. The composition according to anyone of claims 1 to 6, dispersed in an organic solvent.

8. The composition according to anyone of claims 1 to 7, mixed with a crosslink initiator.

9. The composition according to anyone of claims 1 to 8 wherein said reactive insaturation is a (meth)acrylate functionality.

10. The composition according to anyone of claims 1 to 9, wherein said acidic synergist is mono(methacryloyloxy) ethyl maleate.

11. The composition according to anyone of claims 1 to 10, wherein said resin composition is made by reacting a cyclic anhydride of the polymer chain with a reactive unsaturation-containing compound and water.

12. The composition according to claim 11, wherein said polymer is polybutadiene.

13. The composition according to claim 11 or claim 12, wherein said anhydride is a succinic anhydride.

14. The composition according to anyone of claims 11 to 13, wherein said reactive unsaturation-containing compound is an acrylate or methacrylate.

15. The composition according to claim 14, wherein said reactive unsaturation-containing compound is 2-hydroxyethylmethacrylate.

16. The composition according to anyone of claims 1 to 10, made by reacting a maleic anhydride of polybutadiene with an acrylate- or methacrylate-containing compound, water and a half ester of a dibasic acid or a cyclic anhydride that also contains a (meth)acrylate functionality.

17. A method of forming an adhesive bond between two substrates comprising :

(a) providing a composition as defined in anyone of claims 1 to 16 ;
(b) applying said composition to at least one of said substrates ;
(c) contacting said substrates together with said composition between said substrates ; and
(d) exposing said composition to a curing method selected from the group consisting of electromagnetic radiation, electron beam, heat and oxidative drying.

18. The method of claim 17 wherein said composition further comprises a carrier.

19. The method of claim 18 wherein concentration of said composition in said carrier is between about 1% and about 99% by weight.

20. The method of claim 17 or claim 18, wherein said carrier is a reactive diluent.

21. A method of forming an adherent, cured polymeric coating on a substrate comprising :

(a) providing a composition as defined in anyone of claims 1 to 16 ;
(b) applying said composition to said substrate ; and
(c) exposing said composition on said substrate to a curing method selected from the group consisting of electromagnetic radiation, electron beam, heat and oxidative drying.

**22.** The method of claim 21 wherein said composition further comprises a carrier.

**23.** The method of claim 22 wherein the concentration of said composition in said carrier is between about 1% and about 99% by weight.

**24.** The method of claim 22 or claim 23, wherein said carrier is a reactive diluent.

**25.** A substrate coated with a cured composition as defined in anyone of claims 1 to 16.

**26.** The substrate of claim 25, wherein said substrate is selected from the group consisting of metals, glass, plastics and rubbers.

**27.** Substrates bonded with a cured composition as defined in anyone of claims 1 to 16.

**28.** The substrates of claim 27, wherein said substrates are selected from the group consisting of metals, glass, plastics and rubbers.

**Patentansprüche**

**1.** Ungehärtete Polymerharzzusammensetzung, enthaltend eine Polymerkette aus Segmenten der allgemeinen Formel:

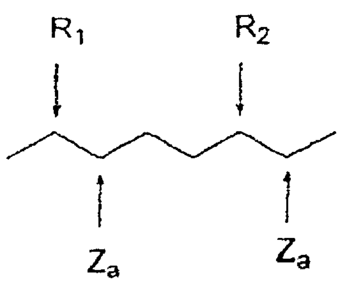

- worin /\/\/\/ für einen Teil der Polymerhauptkette steht, der gegebenenfalls ungesättigt ist und ein oder mehrere Mitglieder der Gruppe bestehend aus Anhydridgruppen, Amidgruppen, Ethergruppen, Estergruppen, Arylgruppen und cyclischen Gruppen enthalten kann;
- worin die Pfeile anzeigen, daß die Seitengruppen an einem beliebigen Punkt an die Hauptkette gebunden sein können und daß in jedem der Teile jedes Moleküls des Polymerharzes variierende Mengen der Seitengruppen vorliegen können;
- worin Z für eine Kohlenwasserstoffgruppe, die die Vernetzung oder Stabilität der Zusammensetzung nicht wesentlich beeinträchtigt, steht und a für 0 oder 1 oder 2 steht;
- worin $R_1$ für eine Gruppe mit einer Kombination von chemisch gebundenen Carboxyl- und Ester-, Thioester- oder Amidgruppierungen steht und
- worin $R_2$ für eine Gruppe mit einer Kombination von chemisch gebundenen Carboxylgruppierungen steht,

wobei die Zusammensetzung mit einem sauren Synergisten vermischt ist, bei welchem es sich um einen Halbester einer zweibasigen Säure oder ein cyclisches Anhydrid, der bzw. das auch eine reaktive Ungesättigtheit enthält, handelt.

**2.** Zusammensetzung nach Anspruch 1, in der $R_1$ für

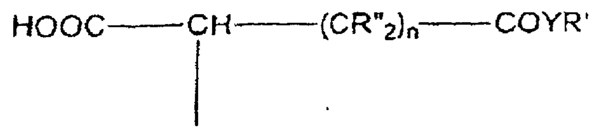

oder

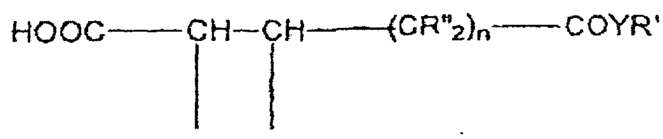

oder

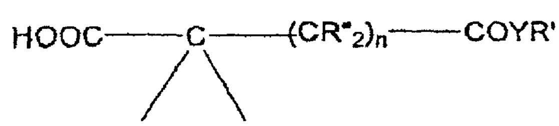

steht,
worin R' eine Ungesättigtheit enthaltende Gruppierung aus einer Acryl-, Methacryl-, Allyloder Vinyletherverbindung bedeutet;
worin R" für einen nicht nucleophilen Substituenten steht;
worin n für eine ganze Zahl von 0 bis 25 steht;
worin Y für -O, -N, -S oder P steht;
und worin $R_2$

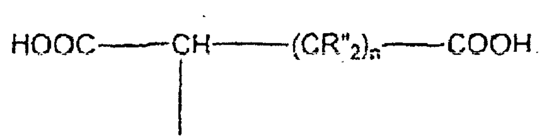

oder

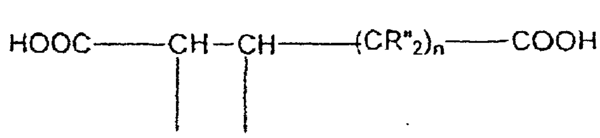

oder

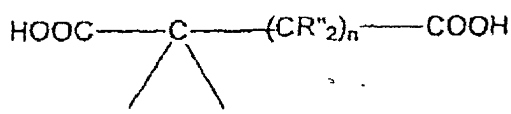

worin R'' für einen nicht nucleophilen Substituenten steht und
worin n für eine ganze Zahl von 0 bis 25 steht;
bedeutet.

**3.** Zusammensetzung nach Anspruch 1 oder 2, in der a für 0 steht.

**4.** Zusammensetzung nach einem der Ansprüche 1 bis 3, in der es sich bei der Polymerhauptkette um Polybutadien handelt.

**5.** Zusammensetzung nach einem der Ansprüche 1 bis 4, in der die Harzzusammensetzung ein Molekulargewicht zwischen etwa 1000 und etwa 300.000 aufweist.

**6.** Zusammensetzung nach einem der Ansprüche 1 bis 5, in der die Harzzusammensetzung ein Molekulargewicht zwischen etwa 2000 und etwa 100.000 aufweist.

**7.** Zusammensetzung nach einem der Ansprüche 1 bis 6, die in einem organischen Lösungsmittel dispergiert ist.

**8.** Zusammensetzung nach einem der Ansprüche 1 bis 7, die mit einem Vernetzungsinitiator vermischt ist.

**9.** Zusammensetzung nach einem der Ansprüche 1 bis 8, in der es sich bei der reaktiven Ungesättigtheit um eine (Meth)acrylatfunktionalität handelt.

**10.** Zusammensetzung nach einem der Ansprüche 1 bis 9, in der es sich bei dem sauren Synergisten um Maleinsäuremono(methacryloyloxy)ethylester handelt.

**11.** Zusammensetzung nach einem der Ansprüche 1 bis 10, in der die Harzzusammensetzung durch Umsetzung eines cyclischen Anhydrids der Polymerkette mit einer Verbindung mit reaktiver Ungesättigtheit und Wasser hergestellt worden ist.

**12.** Zusammensetzung nach Anspruch 11, in der es sich bei dem Polymer um Polybutadien handelt.

**13.** Zusammensetzung nach Anspruch 11 oder 12, in der es sich bei dem Anhydrid um Bernsteinsäureanhydrid handelt.

**14.** Zusammensetzung nach einem der Ansprüche 11 bis 13, in der es sich bei der Verbindung mit reaktiver Ungesättigtheit um ein Acrylat oder Methacrylat handelt.

**15.** Zusammensetzung nach Anspruch 14, in der es sich bei der Verbindung mit reaktiver Ungesättigtheit um 2-Hydroxyethylmethacrylat handelt.

**16.** Zusammensetzung nach einem der Ansprüche 1 bis 10, die durch Umsetzung eines Maleinsäureanhydrids von Polybutadien mit einer Acrylat oder Methacrylat enthaltenden Verbindung, Wasser und einem Halbester einer zweibasigen Säure oder einem cyclischen Anhydrid, der bzw. das auch eine (Meth)acrylatfunktionalität enthält, hergestellt worden ist.

**17.** Verfahren zur Ausbildung einer Klebverbindung zwischen zwei Substraten, bei dem man:

(a) eine Zusammensetzung gemäß einem der Ansprüche 1 bis 16 bereitstellt;

(b) die Zusammensetzung auf mindestens eines der Substrate aufbringt;

(c) die Substrate mit der Zusammensetzung dazwischen zusammenbringt und

(d) die Zusammensetzung einer Härtungsmethode aus der Gruppe bestehend aus elektromagnetischer Strahlung, Elektronenstrahlen, Wärme und oxidativer Trocknung unterwirft.

**18.** Verfahren nach Anspruch 17, bei dem die Zusammensetzung ferner einen Träger enthält.

**19.** Verfahren nach Anspruch 18, bei dem die Konzentration der Zusammensetzung in dem Träger zwischen etwa 1 und etwa 99 Gew.-% liegt.

**20.** Verfahren nach Anspruch 17 oder 18, bei dem es sich bei dem Träger um ein reaktives Verdünnungsmittel handelt.

**21.** Verfahren zur Ausbildung eines adhärenten, gehärteten Polymerüberzugs auf einem Substrat, bei dem man:

(a) eine Zusammensetzung gemäß einem der Ansprüche 1 bis 16 bereitstellt;

(b) die Zusammensetzung auf das Substrat aufbringt und

(c) die Zusammensetzung auf dem Substrat einer Härtungsmethode aus der Gruppe bestehend aus elektromagnetischer Strahlung, Elektronenstrahlen, Wärme und oxidativer Trocknung unterwirft.

**22.** Verfahren nach Anspruch 21, bei dem die Zusammensetzung ferner einen Träger enthält.

**23.** Verfahren nach Anspruch 22, bei dem die Konzentration der Zusammensetzung in dem Träger zwischen etwa 1 und etwa 99 Gew.-% liegt.

**24.** Verfahren nach Anspruch 22 oder 23, bei dem es sich bei dem Träger um ein reaktives Verdünnungsmittel handelt.

**25.** Substrat, das mit einer gehärteten Zusammensetzung gemäß einem der Ansprüche 1 bis 16 überzogen ist.

**26.** Substrat nach Anspruch 25, das aus der Gruppe bestehend aus Metallen, Glas, Kunststoffen und Kautschuken stammt.

**27.** Substrate, die mit einer gehärteten Zusammensetzung gemäß einem der Ansprüche 1 bis 16 verbunden sind.

**28.** Substrate nach Anspruch 27, die aus der Gruppe bestehend aus Metallen, Glas, Kunststoffen und Kautschuken stammen.

## Revendications

**1.** Composition de résine polymère non durcie, comprenant une chaîne de polymère constituée de segments ayant la formule générale :

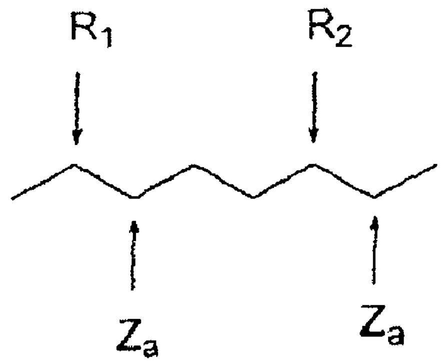

- dans laquelle /\/\/\/ désigne une section du squelette polymère qui est saturée ou insaturée et qui peut contenir un ou plusieurs éléments choisis parmi le groupe constitué par les groupements anhydride, amide, éther, ester, aryle et cyclique ;
- dans laquelle les flèches indiquent que les groupements pendants peuvent être fixés au squelette en un point quelconque, et que diverses quantités des groupements pendants peuvent être présentes dans chacune des sections de chaque molécule de la résine polymère ;
- dans laquelle Z est un hydrocarbyle qui n'interfère sensiblement pas avec la réticulation ou la stabilité de la composition, et où a vaut 0 ou 1 ou 2 ;
- dans laquelle $R_1$ est un groupement ayant une association de groupements carboxyle et ester, thioester ou amide, liés chimiquement ; et
- dans laquelle $R_2$ est un groupement ayant une association de motifs carboxyle liés chimiquement, ladite composition étant mélangée avec un agent synergiste acide, ledit agent synergiste acide étant un hémi-ester d'un acide dibasique ou d'un anhydride cyclique contenant également une insaturation réactive.

**2.** Composition selon la revendication 1,
dans laquelle $R_1$ est :

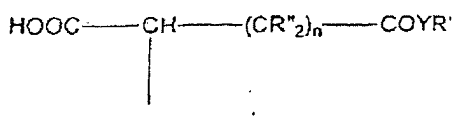

ou

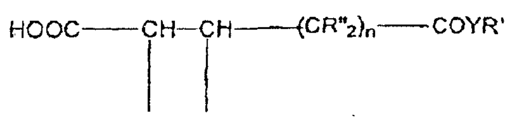

ou

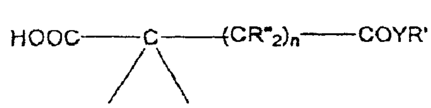

dans lesquelles R' est un motif contenant une insaturation issu d'un composé d'éther acrylique, méthacrylique,

allylique ou vinylique ;
dans lesquelles R" est un substituant non nucléophile ;
dans lesquelles n est un nombre entier allant de 0 à 25 ;
dans lesquelles Y est -O, -N, -S ou P ;
et dans lesquelles $R_2$ est

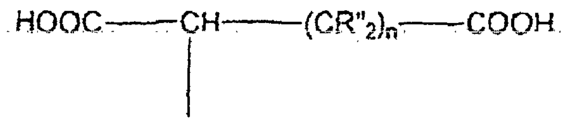

ou

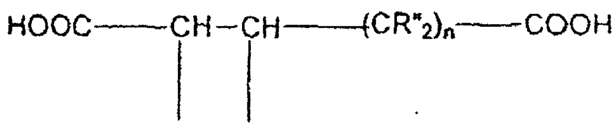

ou

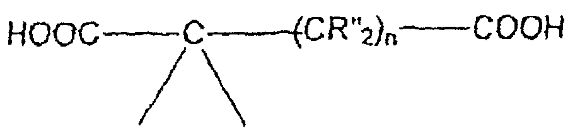

dans lesquelles R" est un substituant non nucléophile ;
et dans lesquelles n est un nombre entier allant de 0 à 25.

**3.** Composition selon la revendication 1 ou la revendication 2, dans laquelle a vaut 0.

**4.** Composition selon l'une quelconque des revendications 1 à 3, dans laquelle ledit squelette polymère est le polybutadiène.

**5.** Composition selon l'une quelconque des revendications 1 à 4, dans laquelle ladite composition de résine a un poids moléculaire compris entre environ 1000 et environ 300 000.

**6.** Composition selon l'une quelconque des revendications 1 à 5, dans laquelle ladite composition de résine a un poids moléculaire compris entre environ 2000 et environ 100 000.

**7.** Composition selon l'une quelconque des revendications 1 à 6, dispersée dans un solvant organique.

**8.** Composition selon l'une quelconque des revendications 1 à 7, mélangée avec un initiateur de réticulation.

**9.** Composition selon l'une quelconque des revendications 1 à 8, dans laquelle ladite insaturation réactive est une fonctionnalité (méth)acrylate.

**10.** Composition selon l'une quelconque des revendications 1 à 9, dans laquelle ledit agent synergiste acide est le maléate de mono-(méthacryloyloxy)éthyle.

**11.** Composition selon l'une quelconque des revendications 1 à 10, dans laquelle ladite composition de résine est produite par la réaction d'un anhydride cyclique de la chaîne de polymère avec un composé contenant une insaturation réactive et de l'eau.

**12.** Composition selon la revendication 11, dans laquelle ledit polymère est le polybutadiène.

**13.** Composition selon la revendication 11 ou la revendication 12, dans laquelle ledit anhydride est l'anhydride succinique.

**14.** Composition selon l'une quelconque des revendications 11 à 13, dans laquelle ledit composé contenant une insaturation réactive est un acrylate ou un méthacrylate.

**15.** Composition selon la revendication 14, dans laquelle ledit composé contenant une insaturation réactive est le méthacrylate de 2-hydroxyéthyle.

**16.** Composition selon l'une quelconque des revendications 1 à 10, produite par la réaction d'un anhydride maléique du polybutadiène avec un composé contenant de l'acrylate ou du méthacrylate, de l'eau et un hémi-ester d'un acide dibasique ou d'un anhydride cyclique contenant également une fonctionnalité (méth)acrylate.

**17.** Méthode de formation d'une liaison adhésive entre deux substrats, comprenant :

(a) la fourniture d'une composition telle que définie selon l'une quelconque des revendications 1 à 16 ;
(b) l'application de ladite composition à au moins un desdits substrats ;
(c) la mise en contact desdits substrats ensemble avec ladite composition entre lesdits substrats ; et
(d) l'exposition de ladite composition à une méthode de durcissement choisie parmi le groupe constitué par le rayonnement électromagnétique, le faisceau d'électrons, la chaleur et le séchage oxydatif.

**18.** Méthode selon la revendication 17, dans laquelle ladite composition comprend en outre un véhicule porteur.

**19.** Méthode selon la revendication 18, dans laquelle la concentration en ladite composition dans ledit véhicule porteur est comprise entre environ 1% et environ 99% en poids.

**20.** Méthode selon la revendication 17 ou la revendication 18, dans laquelle ledit véhicule porteur est un diluant réactif.

**21.** Méthode de formation d'un revêtement polymère durci et adhérent sur un substrat, comprenant :

(a) la fourniture d'une composition telle que définie selon l'une quelconque des revendications 1 à 16 ;
(b) l'application de ladite composition audit substrat ; et
(c) l'exposition de ladite composition sur ledit substrat à une méthode de durcissement choisie parmi le groupe constitué par le rayonnement électromagnétique, le faisceau d'électrons, la chaleur et le séchage oxydatif.

**22.** Méthode selon la revendication 21, dans laquelle ladite composition comprend en outre un véhicule porteur.

**23.** Méthode selon la revendication 22, dans laquelle la concentration en ladite composition dans ledit véhicule est comprise entre environ 1% et environ 99% en poids.

**24.** Méthode selon la revendication 22 ou la revendication 23, dans laquelle ledit véhicule porteur est un diluant réactif.

**25.** Substrat revêtu d'une composition durcie telle que définie selon l'une quelconque des revendications 1 à 16.

**26.** Substrat selon la revendication 25, dans lequel ledit substrat est choisi parmi le groupe constitué par les métaux, le verre, les matières plastiques et les caoutchoucs.

**27.** Substrats fixés par une composition durcie telle que définie selon l'une quelconque des revendications 1 à 16.

**28.** Substrats selon la revendication 27, dans lesquels lesdits substrats sont choisis parmi le groupe constitué par les métaux, le verre, les matières plastiques et les caoutchoucs.